# EUROPÄISCHE PATENTSCHRIFT

(11) **EP 1 841 988 B1**
(45) Veröffentlichungstag und Bekanntmachung des Hinweises auf die Patenterteilung: **29.04.2009**
(21) Anmeldenummer: 05825609.0
(22) Anmeldetag: 13.12.2005
(51) Int. Cl.: F16H 61/12

(54) **VERFAHREN ZUM STEUERN EINES AUTOMATISIERTEN STUFENWECHSELGETRIEBES ZUR FEHLERZUSTANDSERFASSUNG UND EIN SOLCHES GETRIEBE**
MULTI-STEP VARIABLE SPEED TRANSMISSION AND METHOD FOR THE CONTROL THEREOF
BOITE DE VITESSES ETAGEE ET PROCEDE POUR COMMANDER CETTE DERNIERE

(30) Priorität: 25.01.2005 DE 102005004339
(43) Veröffentlichungstag der Anmeldung: 10.10.2007
(73) Patentinhaber: GETRAG Getriebe- und Zahnradfabrik Hermann Hagenmeyer GmbH & Cie KG, 74199 Untergruppenbach (DE)
(72) Erfinder: DREHER, Patrick, 78073 Bad Dürrheim (DE); SEUFERT, Martin, 71711 Steinheim (DE); NAGELEISEN, Frank, 79199 Kirchzarten (DE)
(74) Vertreter: Steil, Christian
(86) Internationale Anmeldenummer: PCT/EP2005/013376
(87) Internationale Veröffentlichungsnummer: WO 2006/079392

(56) Entgegenhaltungen:
- EP-A- 0 438 917
- EP-A- 0 459 274
- EP-A- 0 733 508
- DE-A1- 3 036 389
- DE-A1- 3 843 101
- DE-A1- 10 313 483
- DE-A1- 19 601 618
- DE-A1- 19 857 961
- DE-A1- 19 908 831
- US-A- 5 521 818

## Beschreibung

Die vorliegende Erfindung betrifft ein Verfahren zum Steuern eines automatisierten Stufenwechselgetriebes, insbesondere für Kraftfahrzeuge, wobei das Stufenwechselgetriebe eine Mehrzahl von Gangstufen aufweist, die jeweils ein anderes Übersetzungsverhältnis einrichten. Ein derartiges Verfahren ist ganz üblich bekannt im Stand der Technik.

Ferner betrifft die vorliegende Erfindung ein automatisiertes Stufenwechselgetriebe, insbesondere für Kraftfahrzeuge, mit einer Mehrzahl von Gangstufen, die jeweils ein anderes Übersetzungsverhältnis einrichten, wobei die Gangstufen mittels zugeordneter Aktuatoren ein- und auslegbar sind, und mit einer Steuereinrichtung zum Ansteuern der Aktuatoren.

Derartige automatisierte Stufenwechselgetriebe beinhalten insbesondere sog. automatisierte Schaltgetriebe (ASG) als auch die sog. Doppelkupplungsgetriebe (DKG) sowie sonstige Mehrfachkupplungsgetriebe.

Bei sämtlichen Typen von Stufenwechselgetrieben ist es zu vermeiden, dass in einem Getriebe (bei Mehrfachkupplungsgetrieben in einem Teilgetriebe) zwei Gangstufen gleichzeitig eingelegt sind. Denn dies würde zu einem Blockieren des Antriebsstranges und damit zum Blockieren der Antriebsachse führen.

Bei herkömmlichen handgeschalteten Stufenwechselgetrieben ist zu diesem Zweck in der Regel eine mechanische Gangsperre bzw. Gangverriegelung vorgesehen.

Derartige mechanische Gangsperren führen zu erhöhten Kosten und einem erhöhten Gewicht des Stufenwechselgetriebes. Ferner ist es bei Verwendung derartiger Gangsperren häufig schwierig, kurze Schaltzeiten zu erzielen. Denn eine mechanische Gangsperre ist in der Regel so aufgebaut, dass eine Gangstufe erst dann eingelegt werden kann, wenn zuvor alle Gangstufen vollständig ausgelegt sind.

Das Dokument DE 196 01 618 A1 offenbart ein Sicherheitssystem für ein Automatikgetriebe, wobei ein elektronisches Steuergerät eine Störung der Eingangsgrößen, der Kupplungen und Bremsen außerhalb der Schaltungen erkennt. Bei längerem Vorhandensein einer Störung wird ein Ersatzgang geschaltet. Hierdurch soll eine möglichst lange Fahrsicherheit ohne Diagnoseeintrag gewährleistet werden.

Das Dokument DE 198 54 254 A1 offenbart ein Verfahren zur Steuerung eines Schaltvorganges in Automatikgetrieben, wobei das Ein- und Auslegen von Gangstufen in Abhängigkeit von der Fahrbahnsteigung erfolgt.

Aus der DE 103 18 498 A1 ist ein Verfahren zum Betrieb eines automatischen Getriebes bekannt, wobei ein Hochschaltvorgang nur ausgelöst wird, wenn der Schlupf an den angetriebenen Fahrzeugrädern kleiner ist als ein vorgegebener Grenzwert. Dadurch können Schaltungen in unpassende Gänge verhindert werden.

Ferner offenbart die DE 199 08 831 A1 ein Verfahren zur Gangerkennung, wobei in einem Speicher zu den unterschiedlichen Gängen gehörende Referenzverhältnisse aus Motordrehzahl und Fahrgeschwindigkeit abgelegt werden. Im Fahrbetrieb ermittelt ein Prozessor das jeweils aktuelle Verhältnis aus Motordrehzahl und Fahrgeschwindigkeit. Der Prozessor zeigt dann in Form eines Gangsignals den Gang an, der zu dem mit dem aktuellen Verhältnis übereinstimmenden Referenzverhältnis gehört. Die Ganganzeige kann zur Erstellung von Messprotokollen bei Messfahrten ausgewertet werden, kann jedoch auch zur Ansteuerung einer optischen Ganganzeige verwendet werden.

Aus dem Dokument DE 103 13 483 A1 ist ein Verfahren zur Übersetzungs- bzw. Gangüberwachung für ein Automatgetriebe oder ein automatisiertes Schaltgetriebe eines Kraftfahrzeuges bekannt. Dabei wird die Ist-übersetzung mit der Soll-Übersetzung verglichen, wobei, wenn die Ist-übersetzung von der Soll-Übersetzung abweicht, eine Störung detektiert und zumindest ein Störungszähler der beteiligten Schaltelemente inkrementiert wird, wobei, wenn der Störungszähler einen vorgegebenen Maximalwert überschreitet, ein Symptom bzw. Fehler erkannt wird und Ersatzmaßnahmen eingeleitet werden, und wobei die Ist-übersetzung durch Messung der Ein- und Ausgangsdrehzahlen erfasst wird. Des Weiteren wird die Übersetzungs- bzw. Gangüberwachung außerhalb von Schaltungen, während der Schaltvorgänge und/oder während des Gangeinlegens durchgeführt.

Ferner offenbart das Dokument EP 1 467 128 A1 die Steuerung von zwei Kupplungen eines Doppelkupplungsgetriebes, mit dem Ziel der Optimierung von Synchronisationsvorgängen.

Schließlich offenbart die DE 100 31 754 A1 eine mechanische Gangsperre für ein automatisiertes Schaltgetriebe. Eine weitere mechanische Gangsperre für ein solches automatisiertes Schaltgetriebe ist bekannt aus der DE 196 152 67 C1.

Vor dem obigen Hintergrund ist die Aufgabe der vorliegenden Erfindung, ein verbessertes Verfahren zum Steuern eines automatisierten Stufenwechselgetriebes, ein Verfahren zum frühzeitigen Erkennen eines Fehlers in einem automatisierten Stufenwechselgetriebe sowie ein automatisiertes Stufenwechselgetriebe bereitzustellen, bei dem derartige Verfahren implementiert sind, wobei ohne Bereitstellung einer mechanischen Gangsperre verhindert werden kann, dass zwei Gangstufen gleichzeitig eingelegt werden bzw. bei einer eingelegten Gangstufe eine weitere Gangstufe eingelegt wird.

Diese Aufgabe wird Erfindungsgemäß mit den Maßnahmen des Anspruchs 1 gelöst. Schließlich wird die obige Aufgabe gelöst durch ein automatisiertes Stufenwechselgetriebe, insbesondere für Kraftfahrzeuge, mit einer Mehrzahl von Gangstufen, die jeweils ein anderes Übersetzungsverhältnis einrichten, wobei die Gangstufen mittels zugeordneter Aktuatoren ein- und auslegbar sind, und mit einer Steuereinrichtung zum Ansteuern der Aktuatoren, wobei in der Steuereinrichtung ein Verfahren der Erfindung implementiert ist.

Durch die Erfindung kann ein Fehlerzustand in dem automatisierten Stufenwechselgetriebe, der dazu führen könnte, dass während der Fahrt eine zweite Gangstufe eingelegt wird, frühzeitig erkannt werden. Hierdurch ist es möglich, dass eine mechanische Gangsperre eingespart werden kann.

Somit weist das automatisierte Stufenwechselgetriebe ein geringeres Gewicht auf und kann bei geringeren Kosten hergestellt werden. Ferner ergibt sich eine funktionelle Verbesserung, da schnellere Schaltzeiten möglich sind, insbesondere durch überschneidende Betätigung beim Auslegen eines Startganges und beim Einlegen eines Zielganges.

Die Aufgabe wird somit vollkommen gelöst.

Bei dem erfindungsgemäßen Verfahren gemäß dem ersten Aspekt ist es von besonderem Vorteil, wenn die Schritte a) bis d) durchgeführt werden, wenn bereits eine andere Gangstufe, i.e. Startgangstufe, eingelegt ist.

Obgleich es generell vernünftig ist, das erfindungsgemäße Verfahren unabhängig davon durchzuführen, ob bereits eine andere Gangstufe eingelegt ist, insbesondere, um zu überprüfen, ob eine einzulegende Gangstufe zu den aktuellen Bedingungen von beispielsweise Fahrzeuggeschwindigkeit und Motordrehzahl passt, ist es besonders bevorzugt, eine solche Überprüfung durchzuführen, wenn bereits eine Gangstufe eingelegt ist.

Hierdurch kann frühzeitig erkannt werden, ob aufgrund eines Fehlers versehentlich versucht wird, eine weitere Gangstufe einzulegen.

Ferner ist es bei dem erfindungsgemäßen Verfahren gemäß dem ersten Aspekt vorteilhaft, wenn die Schritte a) bis d) durchgeführt werden, wenn die Ausgangs-Istgröße größer ist als ein vorgegebener Schwellenwert.

Hierbei wird das erfindungsgemäße Verfahren nur dann durchgeführt, wenn das Stufenwechselgetriebe auch tatsächlich zum Antrieb genutzt wird, wenn also beispielsweise das Fahrzeug mit einer bestimmten Mindestgeschwindigkeit (die dem Schwellenwert entspricht) fährt. Denn eine Gefahrensituation kann durch das Einlegen zweier Gangstufen in der Regel nur dann auftreten, wenn das Fahrzeug eine bestimmte Mindestgeschwindigkeit hat.

Sofern die Schaltkupplung als Sperr-Synchronisierung ausgebildet ist, wird das Einlegen eines weiteren Ganges zunächst aufgrund der Sperrbedingung verhindert. Denn an der weiteren Gangstufe liegt zu diesem Zeitpunkt eine Drehzahldifferenz vor.

Zum einen wird bei einem derartigen Versuch jedoch die Sperr-Synchronisierung möglicherweise unnötig belastet. Zum anderen ist es natürlich denkbar, dass ein Aktuator die Belastungsgrenze der Sperr-Synchronisierung überwindet, also die Sperrbedingung "durchbricht" (z.B. durch ein zu langes Andrücken des Synchronringes).

Um dies zu verhindern, wird frühzeitig durch eine Überwachung (Erfassen ob eine Gangstufe eingelegt werden soll), sichergestellt, dass der Versuch, den weiteren Gang einzulegen, abgebrochen werden kann, bevor eine gefährliche bzw. die Synchronisierung schädigende Situation eintreten kann.

Bei dem Verfahren erfolgt eine Überwachung dahingehend, ob das Übersetzungsverhältnis der weiteren Gangstufe zu dem Ist-Zustand (beispielsweise Geschwindigkeit des Fahrzeugs und Motordrehzahl) "passt". Um hier auszuschließen, dass durch Zufall ein transienter Zustand "passt", jedoch nur für einen kurzen Augenblick, wird für eine vorgegebene Zeitspanne überprüft, ob der aktuelle Antriebszustand "passt". Nur wenn dies der Fall ist, kann davon ausgegangen werden, dass das Einlegen der weiteren Gangstufe sinnvoll ist.

In diesem Fall kann ein Fehler beispielsweise darin liegen, dass ein Sensor fehlerhaft ist, der das Auslegen des Startganges hätte erfassen müssen. Denn wenn über eine längere Zeit der Ist-Zustand der Antriebsseite für die einzulegende Gangstufe mit deren Übersetzungsverhältnis übereinstimmt, kann nach den Gesetzen der Logik keine andere Gangstufe eingelegt sein.

Ferner gibt es jedoch noch weitere Möglichkeiten, zu erfassen, ob eine weitere Gangstufe eingelegt werden soll. Diese verschiedenen Möglichkeiten können generell jeweils für sich genommen an die Stelle der Übersetzungsüberprüfung im Schritt c) des Verfahrens gemäß dem ersten Aspekt treten. Vorzugsweise werden diese Erfassungsverfahren jedoch miteinander kombiniert, um eine möglichst große Anzahl von unterschiedlichen Fehlern erfassen und behandeln zu können.

So ist es bei dem Verfahren beispielsweise vorteilhaft, wenn erfasst wird, ob die Gangstufe eingelegt werden soll, indem erfasst wird, ob ein elektrischer Ansteuerstrom, der einem Aktuator zugeführt wird, der der Gangstufe zugeordnet ist, größer ist als ein Stromschwellenwert. Denn wenn ein solcher Aktuator elektrisch bestromt wird, und zwar mit einem Wert größer als der Stromschwellenwert (unterhalb dessen gewöhnlich keine Reaktion der zugeordneten Schaltkupplung erwartet werden kann), muss zwangsläufig auch die Gangstufe eingelegt werden (es muss sich z.B. die zugehörige Schaltstange bewegen).

Gemäß einer weiteren vorteilhaften Ausführungsform wird erfasst, ob die Gangstufe eingelegt werden soll, indem eine Kraft erfasst wird, mit der ein Schaltglied zum Einlegen der Gangstufe bewegt wird.

Hierbei kann die Krafterfassung mittelbar über den Ansteuerstrom des Aktuators erfolgen, kann jedoch auch über einen separaten Kraft-/Drucksensor an der Aktuatorik erfolgen.

Bei einer weiteren bevorzugten Ausführungsform wird erfasst, ob die Gangstufe eingelegt werden soll, indem ein Druck eines Fluidaktuators erfasst wird, mittels dessen ein Schaltglied zum Einlegen der Gangstufe betätigt wird.

Sofern als Aktuator ein Fluidaktuator, beispielsweise ein Hydraulikaktuator verwendet wird, kann die Andrückkraft zum Einlegen der Gangstufe beispielsweise mittelbar über den Fluiddruck bzw. Hydraulikdruck ermittelt werden.

Ferner ist es natürlich möglich, den Weg der Schaltkupplung (Schaltmuffe, Schaltstange) zu überwachen (z.B. durch berührende oder berührungslose Sensoren wie Hall-Sensoren).

Insgesamt ist es ferner vorteilhaft, wenn vor Feststellen des Fehlerzustandes erfasst wird, ob eine mit dem Eingang des Getriebes verbundene Trennkupplungseinrichtung trennt oder nicht.

Sofern festgestellt wird, dass die Trennkupplungseinrichtung nicht trennt, kann entschieden werden, dass kein schwerwiegender Fehlerzustand vorliegt, der das Stilllegen des Fahrzeugs sofort erforderlich macht. Vielmehr kann ein solcher Fehlerzustand dann zunächst als "Einlegehänger" bewertet werden.

Das Erfassen, ob eine mit dem Eingang des Getriebes verbundene Trennkupplungseinrichtung trennt oder nicht, wird gewöhnlich mittels eines Sensors erfasst. Bei dem Auftreten des Fehlerzustandes kann es jedoch sein, dass der Kupplungssensor ausgefallen ist. Daher wird im Rahmen des erfingungsgemäßen Verfahrens vorzugsweise erfasst, ob die Trennkupplungseinrichtung trennt oder nicht, indem überprüft wird, wie lange die Motor- und die Getriebeeingangsdrehzahl innerhalb eines gewissen Toleranzfensters liegen.

Dann, wenn der Fehlerzustand aufgetreten ist und mit der nochmaligen Überprüfung aufgrund Getriebeeingangsdrehzahl und Motordrehzahl festgestellt wird, dass die Trennkupplungseinrichtung geöffnet ist, muss das Auftreten des Fehlers als ein schwerwiegender Fehler bewertet werden, so dass zur Vermeidung von weiteren Gefahren vorzugsweise eine Stilllegung erfolgt.

Hierbei ist es beispielsweise möglich, alle Aktuatoren abzuschalten, beispielsweise stromlos zu schalten, so dass durch üblicherweise eingebaute "Fail Safe"-Mechanismus gefährliche Situationen vermieden werden.

In einem Kraftfahrzeug wird ein solcher Zustand gewöhnlich durch eine Alarmmeldung angezeigt und das defekte System und damit auch das Fahrzeug in einen sicheren Zustand gebracht (das kann im Extremfall dazu führen, dass das Fahrzeug zum Stillstand gebracht wird ("Liegenbleiber")).

Bei dem erfindungsgemäßen automatisierten Stufenwechselgetriebe ist es von besonderem Vorteil, wenn das Stufenwechselgetriebe keine mechanische Gangsperre aufweist.

Ferner ist es bei diesem Getriebe von besonderem Vorteil, wenn die Gangstufen mittels synchronisierter Schaltkupplungen einlegbar sind, insbesondere mittels Sperr-Synchronisierungen.

Denn bei dieser Art von Schaltkupplung kann auf vergleichsweise einfache Weise (beispielsweise über die Andrückkraft) ermittelt werden, ob ein Versuch unternommen wird, eine Gangstufe einzulegen.

Ferner versteht sich, dass das automatisierte Stufenwechselgetriebe vorzugsweise wenigstens zwei unabhängig voneinander betätigbare Aktuatoren aufweist, beispielsweise zwei Schaltwalzen, die jeweils eine separate Gruppe von Gangstufen bedient. Alternativ ist es beispielsweise auch denkbar, dass für jedes Schaltkupplungspaket bzw. für jede Schaltstange zur Betätigung eines solchen Schaltkupplungspaketes ein eigener Aktuator vorgesehen ist.

Generell bringt die vorliegende Erfindung jedoch auch einen Nutzen dann, wenn die Gangstufen des Stufenwechselgetriebes über eine zentrale Schaltwelle o.Ä. geschaltet werden.

Bei Anwendung der Erfindung auf ein DKG (oder ein sonstiges Mehrfachkupplungsgetriebe) ist das gleichzeitige Einlegen von Gangstufen, die unterschiedlichen Teilgetrieben angehören, nicht nur erlaubt sondern erwünscht.

Bei einem DKG muss das Einlegen eines 2. Ganges in einem Teilgetriebe verhindert werden (Blockieren). Das Zuschalten eines zweiten Ganges im anderen Teilgetriebe ist wie erwähnt möglich (kein Blockieren), kann aber von dem erfindungsgemäßen Diagnoseverfahren auch auf Richtigkeit hin überwacht werden (korrektes Übersetzungsverhältnis am Zielgang). Ist das Übersetzungsverhältnis am Zielgang nicht korrekt, besteht die Gefahr von Überdrehzahl an der Kupplung und der Zerstörung der Mitnehmerscheibe zum einen, bzw. wenn die Kupplung bei Überdrehzahl geschlossen wird die Gefahr der Zerstörung des Motors bzw. des Durchrutschens der Hinterachse zum anderen. Dies kann durch das erfindungsgemäße Diagnoseverfahren abgedeckt werden. Gleiches gilt natürlich auch für ASG bei nicht überschneidenden Schaltungen.

Durch die erfindungsgemäßen Verfahren bzw. die bevorzugten Ausführungsformen hiervon kann jeweils wenigstens einer der folgenden Fehler in einem automatisierten Stufenwechselgetriebe erkannt ("diagnostiziert") und geeignet bearbeitet werden:
- ein Schaltgliedbruch wie ein Schaltgabelbruch
- ein Sensorfehler, wobei beispielsweise ein Sensor eines auszulegenden Ganges signalisiert, dass der Gang nicht mehr geschaltet ist, obgleich dies noch der Fall ist,
- Softwarefehler,
- Verkabelungsfehler (beispielsweise werden ein Ventil eines Hydraulikaktuators oder ein elektrischer Motoraktuator bestromt, obgleich dies nicht erwünscht ist),
- Steuergeräte-Hardwarefehler.

Vorzugsweise wird das erfindungsgemäße Verfahren immer durchgeführt, wenn erkannt wird, dass eine Gangstufe eingelegt werden soll. Durch Überprüfung der Soll- und der Ist-Übersetzungen kann somit immer verhindert werden, dass versehentlich eine falsche Gangstufe eingelegt wird bzw. eine Gangstufe zu einem ungünstigen Zeitpunkt bzw. bei ungünstigen Randbedingungen eingelegt wird.

Insbesondere kann hierbei verhindert werden, dass zu einer bereits eingelegten Gangstufe versehentlich eine weitere Gangstufe eingelegt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Ausführungsform eines erfindungsgemäßen automatisierten Stufenwechselgetriebes;
- Fig. 2: ein Flussdiagramm einer Ausführungsform des erfindungsgemäßen Verfahrens;
- Fig. 3: ein Diagramm einer Differenz zwischen Soll- und Ist-Übersetzungsverhältnissen über der Zeit; und
- Fig. 4: ein Flussdiagramm einer weiteren Ausführungsform des erfindungsgemäßen Verfahrens.

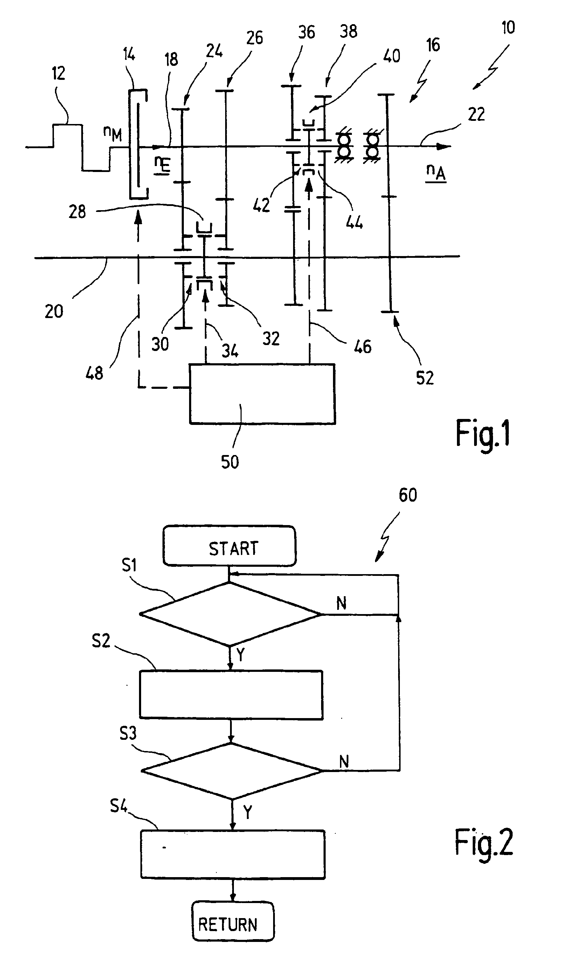

In Fig. 1 ist ein automatisierter Antriebsstrang für ein Kraftfahrzeug, insbesondere einen Personenkraftwagen, generell mit 10 bezeichnet.

Der Antriebsstrang 10 weist einen Antriebsmotor wie einen Verbrennungsmotor 12, eine mit dem Ausgang des Antriebsmotors 12 verbundene Trennkupplung 14, sowie ein mit dem Ausgang der Trennkupplung 14 verbundenes automatisiertes Stufenwechselgetriebe 16 auf.

Eine Eingangswelle 18 des Stufenwechselgetriebes 16 ist mit einem Ausgangsglied der Trennkupplung 14 verbunden. Die Drehzahl der Eingangswelle 18 ist mit n_{E} bezeichnet. Die Drehzahl des Eingangsglieds der Trennkupplung 14, also die Drehzahl des Antriebsmotors 12, ist mit n_{M} bezeichnet.

Das Stufenwechselgetriebe 16 weist eine zu der Eingangswelle 18 parallele Vorgelegewelle 20 und eine mit der Eingangswelle 18 koaxial ausgerichtete Ausgangswelle 22 auf, deren Drehzahl n_{A} ist.

Das Stufenwechselgetriebe 16 weist ferner wenigstens einen ersten Radsatz 24 und einen zweiten Radsatz 26 auf, die mittels eines ersten Schaltkupplungspaketes 28 ein- und auslegbar sind.

Das erste Schaltkupplungspaket 28 weist eine erste Schaltkupplung 30 zum Schalten des ersten Radsatzes 24 und eine zweite Schaltkupplung 32 zum Schalten des zweiten Radsatzes auf.

Das Schaltkupplungspaket 28 ist mittels eines ersten Aktuators 34 automatisiert betätigbar.

Ferner weist das Stufenwechselgetriebe 16 einen dritten Radsatz 36 und einen vierten Radsatz 38 auf, die mittels eines zweiten Schaltkupplungspaketes 40 schaltbar sind. Genauer gesagt, weist das zweite Schaltkupplungspaket 40 eine dritte Schaltkupplung 42 für den dritten Radsatz 36 und eine vierte Schaltkupplung 44 für den vierten Radsatz 38 auf.

Die Schaltkupplungen 30, 32, 42, 44 sind jeweils als Sperr-Synchronkupplungen ausgebildet.

Das zweite Schaltkupplungspaket 40 ist mittels eines zweiten Aktuators 46 betätigbar.

Ferner ist ein schematisch angedeuteter dritter Aktuator 48 zum Betätigen der Trennkupplung 14 vorgesehen.

Die Aktuatoren 34, 46, 48 werden von einer Steuereinrichtung 50 angesteuert, die mittels übergeordneter Steueralgorithmen betrieben wird.

Das Stufenwechselgetriebe 16 ist als Getriebe mit Abtriebskonstante 52 dargestellt.

Es versteht sich jedoch, dass das Stufenwechselgetriebe 16 auch in üblicher Anordnung mit Antriebskonstante ausgebildet sein kann.

Ferner kann der Antriebsstrang 10 auch als Doppelkupplungsgetriebe ausgebildet sein. Hierbei ist die einzelne Trennkupplung 14 durch eine Doppelkupplung ersetzt und die einzelne Eingangswelle 18 ist durch zwei gewöhnlich koaxiale Eingangswellen ersetzt.

Jeder der Radsätze 24, 26, 36, 38 entspricht jeweils einer Gangstufe. Die Anzahl der Gangstufen ist lediglich beispielhaft.

Das Stufenwechselgetriebe 16 weist keine mechanische Gangsperre auf. Daher ist es vom mechanischen Gesichtspunkt her möglich, mehr als eine Gangstufe gleichzeitig einzulegen.

Im Fahrbetrieb wird dies jedoch durch ein elektronisches Steuerverfahren der Steuereinrichtung 50 verhindert, so dass das Stufenwechselgetriebe 16 mit einer "elektronischen" bzw. steuerungstechnischen Gangsperre ausgerüstet ist.

Die Aktuatoren 34, 46 können beispielsweise als Einzelaktuatoren für ein jeweiliges Schaltkupplungspaket ausgebildet sein. Die Aktuatoren 34, 46 können jedoch auch beispielsweise durch zwei Schaltwalzen gebildet sein. Generell ist es auch denkbar, dass die Aktuatoren 34, 46 durch einen Einzelaktuator zur Betätigung einer zentralen Schaltwelle gebildet sind.

Besonders bevorzugt ist jedoch eine Ausführungsform des Stufenwechselgetriebes 16, bei der wenigstens zwei Aktuatoren unabhängig voneinander ansteuerbar sind. Hierdurch lassen sich Gangwechsel, also das Auslegen eines Startganges und das Einlegen eines Zielganges, überschneidend durchführen, um so Schaltzeiten zu verkürzen.

Fig. 2 zeigt ein Flussdiagramm einer ersten Ausführungsform des erfindungsgemäßen Verfahrens, wobei das Flussdiagramm generell mit 60 bezeichnet ist.

Das Flussdiagramm 60 stellt ein Steuerverfahren für ein automatisiertes Stufenwechselgetriebe 16, und zwar zum frühzeitigen Erkennen von Fehlersituationen, und beinhaltet nach einem Startschritt einen Schritt S1, bei dem erfasst wird, ob eine Gangstufe eingelegt werden soll.

Der Schritt S1 läuft dabei vorzugsweise unabhängig von den üblichen Stellsignalen der Steuereinrichtung 50 ab (also beispielsweise unabhängig von einem in dem Hauptprogramm der Steuereinrichtung 50 gesetzten Flag, dass ein Gang einzulegen ist). Vielmehr wird unabhängig hiervon erfasst, ob eine Gangstufe eingelegt werden soll, indem wenigstens einer, bevorzugt jedoch eine beliebige Kombination der folgenden Einzelerfassungsschritte durchgeführt wird:
- Es wird erfasst, ob die Aktuatorik der Gangstufe betätigt ist, ob also ein Strom eines Stellventils eines Hydraulikaktuators oder ein Strom eines elektromotorischen Aktuators über einem bestimmten Schwellenwert liegt,
- eine Sensorik meldet eine Bewegung von Schaltgliedern der betreffenden Gangstufe,
- es ist ein Kraft-/Drucksensor vorgesehen, der eine Andrückkraft der Schaltkupplung der betreffenden Gangstufe misst,
- es wird ein Fluiddruck eines Hydraulikaktuators zum Betätigen der Schaltkupplung der betreffenden Gangstufe überwacht.

In dem Schritt S1 werden vorzugsweise sämtliche Gangstufen des Stufenwechselgetriebes abgefragt.

Sofern in dem Schritt S1 nicht erfasst wird, dass eine Gangstufe eingelegt werden soll (N im Schritt S1), ist für das durchzuführende Fehlererkennungsverfahren ein ordnungsgemäßer Zustand vorhanden, und das Programm geht zum Ausgang zurück.

Sofern erfasst wird, dass eine Gangstufe eingelegt werden soll (J im Schritt S1), werden in einem Schritt S2 eine Eingangs-Istgröße, die im Wesentlichen proportional ist, zu einer Eingangs-Drehzahl n_{E} des Stufenwechselgetriebes 16, und eine Ausgangs-Istgröße erfasst, die im Wesentlichen proportional ist zu einer Ausgangsdrehzahl n_{A} der Ausgangswelle 22 des Getriebes. Mit anderen Worten wird im Schritt S2 erfasst, wie schnell das Kraftfahrzeug fährt und es wird die Eingangs-Drehzahl n_{E} des Stufenwechselgetriebes 16 erfasst.

Im darauf folgenden Schritt S3 wird überprüft, ob eine Differenz ΔR zwischen einem Verhältnis der Eingangs- und der Ausgangs-Istgröße (also das aktuelle Übersetzungsverhältnis im Getriebe) und dem Übersetzungsverhältnis, das durch die Gangstufe eingerichtet würde bzw. werden soll, für eine vorgegebene Zeitspanne kleiner oder größer ist als ein vorgegebener Toleranzbereich.

Durch die Maßnahme, dass diese Prüfung für eine vorgegebene Zeitspanne (die beispielsweise im Bereich von 100 bis 2000 Millisekunden liegen kann) durchgeführt wird, kann gewährleistet werden, dass eine Fehleinschätzung aufgrund eines transienten Zustandes ausgeschlossen wird.

Falls die Differenz ΔR für die vorgegebene Zeitspanne nicht durchgehend größer ist als der vorgegebene Toleranzbereich (N im Schritt S3), wird davon ausgegangen, dass das aktuelle Übersetzungsverhältnis zu dem Übersetzungsverhältnis der einzulegenden Gangstufe passt, und es wird davon ausgegangen, dass der Zustand ordnungsgemäß ist. Das Verfahren geht zurück zum Ausgangspunkt. Die Gangstufe kann eingelegt werden.

Im anderen Fall, wenn also die Differenz ΔR für eine vorgegebene Zeitspanne größer ist als ein vorgegebener Toleranzbereich, wenn also das Übersetzungsverhältnis der einzulegenden Gangstufe nicht dem aktuellen Zustand entspricht (Y im Schritt S3), wird im Schritt S4 ein Fehlerzustand festgestellt.

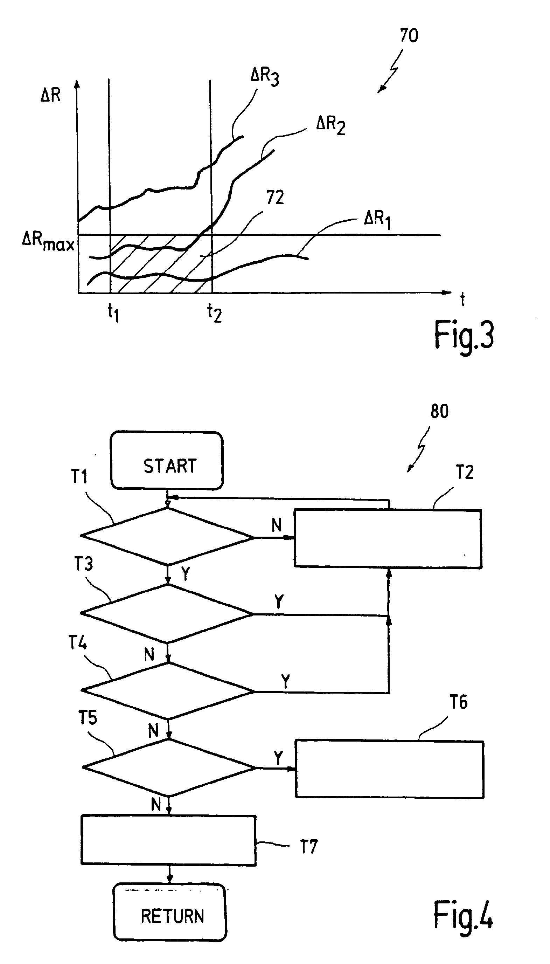

Die Schritte c) und d) lassen sich beispielhaft anhand des Diagramms der Fig. 3 erläutern.

Im Diagramm der Fig. 3 ist die Differenz ΔR über der Zeit aufgetragen. Die vorgegebene Zeitspanne entspricht beispielhaft t2-t1 und eine vorgegebene Maximaldifferenz ΔRₘₐₓ ist ebenfalls dargestellt.

Hierdurch wird für die vorgegebene Zeitspanne ein Fenster 72 definiert, das den vorgegebenen Toleranzbereich darstellt.

Sofern sich der Wert von ΔR immer in dem Fenster 72 befindet (Beispiel ΔR₁), liegt kein Fehlerzustand vor.

Gleiches gilt für das Beispiel ΔR₂, bei dem der Wert von ΔRₘₐₓ zwar kurzzeitig überschritten wird, jedoch nicht für die gesamte vorgegebene Zeitspanne t₂-t₁.

Hingegen wird für den Fall des zeitlichen Verlaufes von ΔR₃ ein Fehlerzustand festgestellt, da die Differenz ΔR₃ für die gesamte vorgegebene Zeitspanne außerhalb des Toleranzfensters 72 liegt.

In der Darstellung der Fig. 3 ist zu beachten, dass die zeitlichen Verlaufslinien ΔR₁ bis ΔR₃ rein schematischer Natur sind und nicht die tatsächlichen Verhältnisse in einem Stufenwechselgetriebe darstellen, sondern vielmehr die Funktionsweise des erfindungsgemäßen Verfahrens gemäß Fig. 2 darstellen sollen.

Fig. 4 zeigt eine weitere Ausführungsform des erfindungsgemäßen Verfahrens, das in Fig. 4 generell mit 80 bezeichnet ist.

Das Verfahren 80 entspricht hinsichtlich dem generellen Ablauf dem Verfahren 60 der Fig. 2, so dass im Folgenden lediglich auf Unterschiede eingegangen werden soll.

Im Verfahren 80 wird nach einem Startschritt ein Schritt T₁ durchgeführt, bei dem abgefragt wird, ob eine Schaltkupplung einer Gangstufe angedrückt wird. Dies kann beispielsweise mittelbar über eine Ventilbestromung erfolgen, über den Strom eines elektromotorischen Aktuators, durch einen Drucksensor oder dergleichen.

Falls erkannt wird, dass keine Gangstufe eingelegt werden soll (N im Schritt Tl), wird der Zustand im Schritt T2 als ordnungsgemäß festgestellt, und das Verfahren geht zurück zum Anfang.

Falls jedoch im Schritt T1 festgestellt wird, dass eine Schaltkupplung angedrückt bzw. eine Aktuatorik betätigt wird, wird im Schritt T3 abgefragt, ob sich die Schaltkupplung der einzulegenden Gangstufe bewegt.

Dabei wird eine Bewegung innerhalb eines gewissen Fensters als Stillstand angesehen. Sofern jedoch eine Bewegung über eine längere Zeitdauer erfolgt, erkennt das erfindungsgemäße Verfahren, dass die Schaltkupplung nicht nur angedrückt sondern auch durchgeschaltet wird. Dabei wird beispielsweise der Sperrzustand der als Sperr-Synchronisierung ausgebildeten Schaltkupplung überwunden.

In diesem Fall (J im Schritt T3) wird wiederum festgestellt, dass alles ordnungsgemäß abläuft.

Sofern bei betätigter Aktuatorik über eine gewisse Zeit keine Bewegung der Schaltkupplung erfasst wird (N im Schritt T3), kann ein sog. "Einlegehänger" vorliegen.

Für diesen Fall wird im Schritt T4 überprüft, ob das aktuelle Übersetzungsverhältnis (ermittelt durch Eingangs-Drehzahl n_{E} und Ausgangs-Drehzahl n_{A}) zu dem Übersetzungsverhältnis der betreffenden Gangstufe passt. Falls dies der Fall ist (J im Schritt T4), wird lediglich erkannt, dass ein momentaner Einlegehänger vorliegt, wobei jedoch die Funktion ansonsten ordnungsgemäß ist, was im Schritt T2 festgestellt wird.

Falls das aktuelle Übersetzungsverhältnis jedoch nicht zu der einzulegenden Gangstufe passt (N im Schritt T4), liegt offensichtlich ein Fehler vor.

Bei einer ersten Ausführungsform des Verfahrens gemäß Fig. 4 ist das Verfahren damit beendet, der Fehlerzustand wird festgestellt und weitere geeignete Maßnahmen werden eingeleitet.

Bei der dargestellten bevorzugten Ausführungsform des Verfahrens 80 wird jedoch im Anschluss hier noch ein weiterer Schritt T5 ausgeführt, indem ermittelt wird, ob das Problem möglicherweise von einer nicht-trennenden Trennkupplung 14 herkommt.

Dabei wird nicht auf ein eventuell in der Steuereinrichtung vorhandenes Signal ("Kupplung offen") geachtet. Vielmehr werden die Motordrehzahl n_{M} und die Getriebeeingangsdrehzahl n_{E} überprüft. Sofern deren Differenz innerhalb eines gewissen Toleranzfensters liegt, ist die Kupplung (beispielsweise trotz eines entsprechenden Signals von einem fehlerhaften Kupplungssensor) nicht geöffnet sondern ist geschlossen. In diesem Fall wird davon ausgegangen, dass kein den Fahrbetrieb elementar berührendes Problem vorliegt, möglicherweise kann in diesem Fehlerzustand sogar weitergefahren werden. Daher wird (Y im Schritt T5) im Schritt T6 der Fehlerzustand toleriert, solange die Trennkupplung 14 geschlossen ist.

Sofern jedoch auch die Überprüfung der Trennkupplung 14 anzeigt, dass der aufgetretene Fehlerzustand nicht von der Trennkupplung 14 herrührt (N im Schritt T5), wird im Schritt T7 ein erheblicher Fehlerzustand festgestellt.

Hierbei wird vorzugsweise ein betriebssicherer Zustand hergestellt, beispielsweise indem keine weiteren Schaltungen mehr erlaubt werden. Die Aktuatoren für die Schaltkupplungen werden in einen Fail-Safe-Zustand gebracht, beispielsweise stromlos geschaltet.

Durch das Verfahren 80 der Fig. 4 kann somit ein Fehlerzustand, insbesondere ein Einfachfehler, wie ein Schaltgabelbruch, ein Sensorfehler des auszulegenden oder des einzulegenden Ganges, ein Softwarefehler, ein Verkabelungsfehler, oder ein Steuergeräte-Hardwarefehler, erkannt werden. Ferner kann bei Erkennen eines Fehlerzustandes eine geeignete Abfolge von Schritten zur Beibehaltung der Sicherheit durchgeführt werden.

Generell kann das erfindungsgemäße Verfahren bei allen automatisierten Stufenwechselgetrieben angewandt werden, bei denen die Getriebeeingangsdrehzahl n_{E} und die Getriebeausgangsdrehzahl n_{A} (oder Parameter proportional hierzu) erfasst werden.

Sofern auch Fehler an der Verkabelung und/oder am Steuergerät erkannt werden sollen, ist ferner eine zusätzliche Strom-/Druck- und/oder Krafterfassung an der Schaltstange, der Schaltwelle bzw. einer Schaltwalze vorzusehen.

Obgleich der Einsatz vorzugsweise bei Stufenwechselgetrieben ohne mechanische Gangsperre (Gangverriegelung) vorzusehen ist, ist auch ein Einsatz bei Stufenwechselgetrieben mit einer solchen Gangsperre denkbar, da auch dort ein Schaltgabelbruch auftreten kann.

Insgesamt ist es durch die erfindungsgemäßen Verfahren 60, 80 jedoch vorteilhaft, dass eine mechanische Gangverriegelung eingespart werden kann. Es wird verhindert, dass mehr als ein Gang simultan eingelegt ist.

Es versteht sich, dass die erfindungsgemäßen Verfahren 60, 80 vorzugsweise nur dann ausgeführt werden, wenn ein Antrieb mittels des Stufenwechselgetriebes 16 erfolgt (wenn das Fahrzeug fährt). Ferner versteht sich, dass die Verfahren 60, 80 zyklisch durchgeführt werden, beispielsweise alle 2, 4, 10, ..., 320 Millisekunden.

Generell ist es bei den erfindungsgemäßen Verfahren vorteilhaft, dass ein Blockieren der Antriebsachse verhindert werden kann.

Zwar verhindert bereits eine Sperr-Synchronisierung für eine gewisse Zeit, dass oberhalb einer gewissen Mindestdrehzahl ein weiterer Gang geschaltet werden kann. Um die Belastungsgrenze der Synchronisierung jedoch nicht zu überschreiten, wird das erfindungsgemäße Verfahren durchgeführt.

Ferner wird zum allgemeinen Verständnis für eine spezielle Ausführungsform mit hydraulischer Betätigung von Einzelschaltstangen für die Schaltkupplungspakete des Stufenwechselgetriebes Folgendes erläutert.

Wird ein Ventil eines Hydraulikaktuators für eine einzelne Schaltstange bestromt (Strom bzw. Kraft über einem Schwellenwert, also einem Wert, ab dem eine Reaktion auf die Bestromung erwartet werden kann), muss sich der Logik folgend auch die zugehörige Schaltstange bewegen. Bewegt sich diese nicht, kann entweder ein Gang nicht ein- oder ausgelegt werden. Ferner kann es sich auch um einen Sensorfehler handeln. Kann ein Gang nicht ausgelegt werden, muss das aktuelle Übersetzungsverhältnis zum Gang passen, an welchem eben keine Bewegung diagnostiziert werden kann. In diesem Fall liegt ein Auslegehänger vor. Im Falle eines Einlegehängers - ohne dass ein anderer Gang geschaltet ist - kann das Übersetzungsverhältnis entweder zum ansynchronisierten Gang passen oder auch nicht. Jedoch ist es nicht möglich, oder zumindest extrem unwahrscheinlich, dass das Übersetzungsverhältnis für eine größere Zeit (vorgegebene Zeitspanne t2-t1) zu einer anderen Gangstufe als der ansynchronisierten Gangstufe passt. Ist jedoch eine andere Gangstufe geschaltet, als die Gangstufe, deren zugeordnete Schaltstange als stillstehend und bestromt erkannt wurde, muss das Übersetzungsverhältnis zu einem bereits eingelegten Gang passen. Wird ein solcher Fehler erkannt, muss die Schaltung abgebrochen werden und die Aktuatorik stillgelegt werden. Ein Sonderfall ist hierbei ist noch die nicht-trennende Kupplung, wie oben beschrieben.

## Patentansprüche

1. Verfahren (60; 80) zum Steuern eines automatisierten Stufenwechselgetriebes (16), insbesondere für Kraftfahrzeuge, wobei das Stufenwechselgetriebe (16) eine Mehrzahl von Gangstufen (24, 26, 36, 38) aufweist, die jeweils ein anderes Übersetzungsverhältnis einrichten, **gekennzeichnet durch** die Schritte:
a) Erfassen (S1; T1, T3), ob eine Gangstufe (24, 26, 36, 38) eingelegt werden soll, indem erfasst wird, ob eine Schaltkupplung dieser Gangstufe betätigt wird,
b) Erfassen (S2; T4) einer Eingangs-Istgröße (n_{E}), die im wesentlichen proportional ist zu einer Eingangs-Drehzahl (n_{E}) des Stufenwechselgetriebes, und einer Ausgangs-Istgröße (n_{A}), die im wesentlichen proportional ist zu einer Ausgangsdrehzahl (n_{A}) des Getriebes,
c) Überprüfen (S3; T4), ob eine Differenz (ΔR) zwischen einem Verhältnis der Eingangs- und der Ausgangs-Istgröße (n_{E}, n_{A}) und dem Übersetzungsverhältnis, das durch die Gangstufe (24, 26, 36, 38) eingerichtet würde, für eine vorgegebene Zeitspanne kleiner ist als ein vorgegebener Toleranzbereich (ΔR_{MAX}), und
d) Feststellen (S4; T5-T7) eines Fehlerzustandes, falls die Differenz (ΔR) für die vorgegebene Zeitspanne nicht innerhalb des Toleranzbereiches (ΔR_{MAX}) liegt.

2. Verfahren nach Anspruch 1, wobei die Schritte a) bis d) durchgeführt werden, wenn bereits eine andere Gangstufe, d.h. eine Startgangstufe, eingelegt ist.

3. Verfahren nach Anspruch 1 oder 2, wobei die Schritte a) bis d) durchgeführt werden, wenn die Ausgangs-Istgröße (n_{A}) größer ist als ein vorgegebener Schwellenwert.

4. Verfahren nach einem der Ansprüche 1 - 3, wobei erfasst wird, ob die Gangstufe (24, 26, 36, 38) eingelegt werden soll, indem erfasst wird, ob ein elektrischer Ansteuerstrom, der einem Aktuator (34, 46) zugeführt wird, der der Gangstufe (24, 26, 36, 38) zugeordnet ist, größer ist als ein Stromschwellenwert.

5. Verfahren nach einem der Ansprüche 1 - 4, wobei erfasst wird, ob die Gangstufe (24, 26, 36, 38) eingelegt werden soll, indem eine Kraft erfasst wird, mit der ein Schaltglied zum Einlegen der Gangstufe bewegt wird.

6. Verfahren nach einem der Ansprüche 1 - 5, wobei erfasst wird, ob die Gangstufe eingelegt werden soll, indem ein Fluiddruck eines Fluidaktuators (34, 46) erfasst wird, mittels dessen ein Schaltglied zum Einlegen der Gangstufe (24, 26, 36, 38) betätigt wird.

7. Verfahren nach einem der Ansprüche 1 - 6, wobei nach Feststellen (T7) des Fehlerzustandes erfasst wird, ob (T5) eine mit dem Eingang des Getriebes verbundene Trennkupplungseinrichtung trennt oder nicht.

8. Automatisiertes Stufenwechselgetriebe (16), insbesondere für Kraftfahrzeuge, mit einer Mehrzahl von Gangstufen (24, 26, 36, 38), die jeweils ein anderes Übersetzungsverhältnis einrichten, wobei die Gangstufen (24, 26, 36, 38) mittels zugeordneter Aktuatoren (34, 46) ein- und auslegbar sind, und mit einer Steuereinrichtung (50) zum Ansteuern der Aktuatoren,
wobei in der Steuereinrichtung (50) ein Verfahren (60; 80) nach einem der Ansprüche 1 - 7 implementiert ist.

9. Automatisiertes Stufenwechselgetriebe nach Anspruch 8, wobei das Stufenwechselgetriebe (16) keine mechanische Gangsperre aufweist.

10. Automatisiertes Stufenwechselgetriebe nach Anspruch 8 oder 9, wobei die Gangstufen (24, 26, 36, 38) mittels synchronisierter Schaltkupplungen (30, 32, 42, 44) einlegbar sind, insbesondere mittels Sperr-Synchronisierungen.

## Claims

1. Method (60; 80) for controlling an automated multi-step variable speed transmission (16), in particular for motor vehicles, wherein the multi-step variable speed transmission (16) has a plurality of gear speeds (24, 26, 36, 38) which each configure a different transmission ratio, **characterized by** the steps:
a) it is determined (S1; T1, T3) whether a gear speed (24, 26, 36, 38) is to be engaged, by determining whether a clutch for this gear speed is activated,
b) acquisition (S2; T4) of an input actual variable (n_{E}) which is essentially proportional to an input rotational speed (n_{E}) of the multi-step variable speed transmission, and an output actual variable (n_{A}) which is essentially proportional to an output rotational speed (n_{A}) of the transmission,
c) checking (S3; T4) whether a difference (ΔR) between a ratio of the input and output actual variables (n_{E}, n_{A}) and the transmission ratio which would be configured by the gear speed (24, 26, 36, 38) is smaller for a predefined time period than a predefined tolerance range (ΔRₘₐₓ), and
d) detection (S4; T5-T7) of a fault state if the difference (34, 46), which is assigned to the gear speed (24, 26, 36, 38), (ΔR) is not within the tolerance range (ΔRₘₐₓ) for the predefined time period.

2. Method according to Claim 1, wherein the steps a) to d) are carried out if another gear speed, i.e. a starting gear speed, has already been engaged.

3. Method according to Claim 1 or 2, wherein the steps a) to d) are carried out if the output actual variable (n_{A}) is greater than a predefined threshold value.

4. Method according to one of Claims 1-3, wherein it is determined whether the gear speed (24, 26, 36, 38) is to be engaged, by determining whether an electrical actuation current, which is fed to an actuator (34, 46), which is assigned to the gear speed (24, 26, 36, 38), is greater than a current threshold value.

5. Method according to one of Claims 1-4, wherein it is determined whether the gear speed (24, 26, 36, 38) is to be engaged by sensing a force with which a shift element for engaging the gear speed is moved.

6. Method according to one of Claims 1-5, wherein it is determined whether the gear speed is to be engaged by sensing a fluid pressure of a fluid actuator (34, 46) by means of which a shift element for engaging the gear speed (24, 26, 36, 38) is activated.

7. Method according to one of Claims 1-6, wherein, after the fault state has been detected (T7), it is sensed whether or not (T5) a clutch device is connected to the input of the transmission.

8. Automated multi-step variable speed transmission (16), in particular for motor vehicles, having a plurality of gear speeds (24, 26, 36, 38) which each configure a different transmission ratio, wherein the gear speeds (24, 26, 36, 38) can be engaged and disengaged by means of assigned actuators (34, 46), and having a control device (50) for driving the actuators,
wherein a method (60; 80) according to one of Claims 1-7 is implemented in the control device (50).

9. Automated multi-step variable speed transmission according to Claim 8, wherein the multi-step variable speed transmission (16) does not have a mechanical gear lock.

10. Automated multi-step variable speed transmission according to Claim 8 or 9, wherein the gear speeds (24, 26, 36, 38) can be engaged by means of synchronized clutches (30, 32, 42, 44), in particular by means of locking synchronization means.

## Revendications

1. Procédé (60 ; 80) pour commander une boîte de vitesses étagée automatisée (16), notamment pour des véhicules automobiles, sachant que la boîte de vitesses étagée (16) présente une pluralité de vitesses (24, 26, 36, 38) qui définissent chacune un rapport de transmission différent, **caractérisé par** les étapes suivantes, consistant à :
a) détecter (S1 ; T1, T3) si une vitesse (24, 26, 36, 38) doit être enclenchée, en détectant si un embrayage de commutation de cette vitesse est actionné,
b) détecter (S2 ; T4) une valeur réelle d'entrée (n_{E}) qui est essentiellement proportionnelle à une vitesse de rotation d'entrée (n_{E}) de la boîte de vitesses étagée, et une valeur réelle de sortie (n_{A}) qui est essentiellement proportionnelle à une vitesse de rotation de sortie (n_{A}) de la boîte,
c) contrôler (S3 ; T4) si une différence (ΔR) entre un rapport de la valeur réelle d'entrée et de la valeur réelle de sortie (n_{E}, n_{A}) et le rapport de transmission défini par la vitesse (24, 26, 36, 38) est, pendant un laps de temps prédéfini, inférieure à une plage de tolérance prédéfinie (ΔR_{MAX}), et
d) déterminer (S4 ; T5-T7) un état de dysfonctionnement, si la différence (ΔR) ne se situe pas dans la plage de tolérance (ΔR_{MAX}) pendant le laps de temps prédéfini.

2. Procédé selon la revendication 1, sachant que les étapes a) à d) sont exécutées si une autre vitesse, c'est-à-dire une vitesse de démarrage, est enclenchée.

3. Procédé selon la revendication 1 ou 2, sachant que les étapes a) à d) sont exécutées si la valeur réelle de sortie (n_{A}) est supérieure à une valeur de seuil prédéfinie.

4. Procédé selon l'une des revendications 1 à 3, sachant qu'on détecte si la vitesse (24, 26, 36, 38) doit être enclenchée en détectant si un courant électrique de commande, qui est apporté à un actionneur (34, 46) associé à la vitesse (24, 26, 36, 38), est supérieur à une valeur de seuil de courant.

5. Procédé selon l'une des revendications 1 à 4, sachant qu'on détecte si la vitesse (24, 26, 36, 38) doit être enclenchée en détectant une force avec laquelle un organe de commutation est déplacé pour enclencher la vitesse.

6. Procédé selon l'une des revendications 1 à 5, sachant qu'on détecte si la vitesse doit être enclenchée en détectant une pression de fluide d'un actionneur à fluide (34, 46) au moyen duquel un organe de commutation est actionné pour enclencher la vitesse (24, 26, 36, 38).

7. Procédé selon l'une des revendications 1 à 6, sachant qu'après détermination (T7) de l'état de dysfonctionnement, on détecte si (T5) un dispositif d'embrayage séparateur relié à l'entrée de la boîte effectue ou non une séparation.

8. Boîte de vitesses étagée automatisée (16), notamment pour des véhicules automobiles, avec une pluralité de vitesses (24, 26, 36, 38) qui définissent chacune un rapport de transmission différent, sachant que les vitesses (24, 26, 36, 38) peuvent être enclenchées et désenclenchées au moyen d'actionneurs associés (34, 46), et avec un dispositif de commande (50) pour commander les actionneurs,
sachant qu'un procédé (60 ; 80) selon l'une des revendications 1 à 7 est mis en oeuvre dans le dispositif de commande (50).

9. Boîte de vitesses étagée automatisée selon la revendication 8, sachant que la boîte de vitesses étagée automatisée (16) ne présente pas de verrouillage mécanique de vitesse.

10. Boîte de vitesses étagée automatisée selon la revendication 8 ou 9, sachant que les vitesses (24, 26, 36, 38) peuvent être enclenchées au moyen d'embrayages de commutation synchronisés (30, 32, 42, 44), notamment au moyen de synchronisations de verrouillage.
